(19)

**Europäisches Patentamt**

**European Patent Office**

**Office européen des brevets**

(11) **EP 4 159 935 A1**

(12) **EUROPEAN PATENT APPLICATION**

(43) Date of publication:
**05.04.2023 Bulletin 2023/14**

(21) Application number: **22198971.8**

(22) Date of filing: **30.09.2022**

(51) International Patent Classification (IPC):
**E03B 7/00** *(2006.01)* **G01M 3/28** *(2006.01)*

(52) Cooperative Patent Classification (CPC):
**G01M 3/2807; E03B 7/003**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 BE 202105764**

(71) Applicant: **en.con bvba**
**9051 Sint-Denijs-Westrem (BE)**

(72) Inventor: **VAN DAMME, Daniël**
**9051 Sint-Denijs-Westrem (BE)**

(74) Representative: **Brantsandpatents bv**
**Pauline Van Pottelsberghelaan 24**
**9051 Ghent (BE)**

(54) **A SYSTEM AND A METHOD FOR ONLINE FLOW SURVEY AND DYSFUNCTIONS MONITORING OF DRINKING WATER DISTRIBUTION NETWORKS**

(57)      The present invention concerns a computer implemented system and method for continuous online flow survey and dysfunction monitoring whereby dysfunction includes flow values resulting from abnormal consumption events and leaks sized and ranged according to the characteristics of the surveyed District Metered Area of water distributing networks.

The present invention further concerns the use of the computer implemented method to produce a consumption model ready for use in off-line hydraulic network modelling and preferably use this model as tool for design of network extensions or improvements of the network.

The present invention further concerns the use of the computer implemented method to produce a consumption model ready for use in off-line hydraulic network modelling and preferably use this model as tool online pressure control keeping the pressure at the lowest admissible and guaranteed rate.

FIG. 2

EP 4 159 935 A1

**Description**

**FIELD OF THE INVENTION**

The present invention relates to methods for fluid transporting network flow monitoring and input flow values of network modelling. In particular, the present invention relates to a computer implemented system and method for the monitoring of dysfunctions in water distribution networks.

**BACKGROUND**

According to publications of the Word Bank almost 800 million people worldwide lack access to safe drinking water.

Already 25% of the EU is under water stress [1]. This leads to a decrease of biodiversity and water quality, while soil erosion and desert coverage are increasing year after year. It has been demonstrated that scarcity of fresh water has not only ecological effects but that it also puts a break on economic development. Spills and inadequate use of water are to be banned in a next future.

On the supply side, the lion's share of drinking water spills originates from leaking water distribution systems. In Europe leaks are estimated to amount an average of around thirty per cent of the processed and distributed quantities. In urban areas, leakage is substantially higher, reaching sometimes up 70 to 80 per cent. The yearly drinking water spill in Europe represent a volume that is enough to provide the population of France with potable drinking water.

The European Committee is aware that water is a depleting resource and many attempts have been undertaken in the last decennium to lower the volume of spills resulting from leaking distribution networks. The EU published in 2010 the results of

[1] The Problems of water stress; EU publication Last modified 23 Nov 2020; https://www.eea.europa.eu/publications/92-9167-025-1/page003.html a huge study all over Europe assessing the state of the art in the field. The study recommends the best practices in dealing with leaking networks [2].

We also refer to the article published in the Urban Water Journal (8 December 2018)[3], giving a broad overview of industrial and scientifical publications of the last 10 years, attesting the wide economic and ecologic interests on the matter.

Water was during the last century too often considered as a free good from the sky. This situation has meanwhile dramatically changed. The importance of water is illustrated in the report of the UN World Water Report 2021 (dated 21 March 2021) that proposes five interrelated perspectives valuing water.

Purely economically speaking, the cost of drinking water losses can no longer be evaluated at its marginal (pumping) cost. The water spilled as a result of leaking distribution pipes has been pumped, stored , processed, and transported.

The capacity of the water delivering infrastructure in industrialised countries has nowadays reached its critical maximum. Therefore, water spills are to be valued at the same operational full cost as the distributed water. Pro-active leak management and leaks repair mean savings in production, storage- and transport-capacity.

Savings on leaks represent, depending on local conditions and quality of the available resources, a cost that amounts ([4]) from 1 up to 2 € /m$^3$, this is about 30 % of the invoiced cost. This figure gives a good idea of the huge cost of water spills that is charged to the consumers through the price of the delivered water.

On the other hand, Utilities have to complain stringent economical constraints. This implicates that the cost of proactive leak management and repair may not exceed the cost of the spilled water. At the breakeven point there is a huge ecological advantage.

The evolution sketched above has caused a growing need of proactive leakage control. Technicians and universities have been searching since the early seventies for *affordable* methods of leak detection and leak management. [2] EU Reference document Good Practices on Leakage Management WFD CIS WG PoM ISBN 978-92-79-45069-3 DOI: 10.2779/102151 [3] Evolution of research on water leakage control strategies: where are we now? DOI:10.1080/1573062X.2018.1547773 [4] It is obvious that the cost of sanitation and sewage treatment are not to be counted in the cost of drinking water spilled in the ground.

Several methods make use of sound wave or pressure wave analysis to detect leakages within a limited segment of pressurised pipes. These specific procedures are not comparable with the one here disclosed. Their major disadvantage is the absence of quantified volumes of leaks.

Methods and systems according to the preamble can be found in literature. DE102011 078240A1 discloses a method, device and assistance system for detecting leaks in an area of a supply network whereby leaks are detected by comparing real measured values supplied by sensors with measured values determined by a Monte Carlo simulation.

US2021 096037A1 discloses a method and system for predicting water leakage events in district metered area of water distribution network. The method comprises receiving historic data of water flow and water pressure associated with DMA for predicting flow data and pressure data of water in the DMA for predefined future time period. Thereafter, method comprises retrieving plurality of cluster points corresponding to the predicted flow data, the pressure data, and an anomaly score identified for each of the plurality of cluster points from machine learning model. The method detects one or more cluster points as anomaly points by comparing anomaly scores with lower bound value and upper bound value and thereafter predicts leakage events corresponding to each of the detected anomaly points.

US2020158291A1 discloses a method for detecting pipe bursts in water distribution systems based on pressure disturbance extraction, including following steps: collecting and pre-processing monitored pressure data, and establishing a matrix of monitored pressures; analysing time-domain and frequency-domain features of the matrix of monitored pressures by Fourier transform, extracting disturbances, and generating pressure disturbances matrices; identifying outliers in the pressure disturbances matrices by isolation forest algorithm; and further identifying detected outliers by calculating and qualitative index A and quantitative index B and outputting a result of pipe burst detection.

Above mentioned methods have the common major disadvantage of requesting time consuming preliminary flow surveys. Once the measurement period is representative (time period from 3 to 6 months), a mathematical treatment of the timeseries is proceeded using various forms of statistical analysis in order to deliver calibrated reference variation curves of flow and / or pressure. The resulting variation curves are subsequently uploaded in the system. Flow abnormalities are then detected by online comparison of the benchmark curves with the real time online measurements.

As normal flow is subject to the evolution of consumption or of the number of connections, the benchmark becomes obsolete with the time and needs timely recalculation. This activity request the intervention of specialised engineers in particular to eliminate the effect of spikes during the flow survey.

As a result of the broad variation field of dysfunction free consumption, statistical methods result in high values of alarm thresholds hindering by this the automatic detection and accurate quantification of small leaks.

The disadvantages of these systems are:

- the lead time between the installation of the transducers and the availability of the system, resulting in a relevant capital immobilisation lowering the Rate of Return
- the cost of set up and maintenance of the system
- the lack of accuracy in the detection of small dysfunctions

The present invention aims to resolve the problems and disadvantages mentioned above. The aim of the invention is to provide a method which eliminates definitively those disadvantages. In particular the aim in not to restrict the applicability of the invention to simple, smaller systems with homogenous flow variation while not incurring in high costs nor inaccurate quantification of the leaks developed by a water system.

## SUMMARY OF THE INVENTION

The present invention and embodiments thereof serve to provide a solution to one or more of above-mentioned disadvantages. To this end, the present invention relates to a computer implemented system and method for continuous online flow survey and dysfunction monitoring according to claim 1. Preferred embodiments of the system and method are shown in any of the claims 2 to 5.

In a second aspect, the present invention relates to a use of the system and method according to claim 6. More particular, the use as described herein provides a consumption model in normal working conditions ready for use in off-line or on-line hydraulic network modelling. Preferred embodiments of the method are shown in any of the claims 7 to 9.

The core of the inventivity of the disclosed invention consists mainly in:

- The model created using the method adapts itself to normal evolution of the consumption resulting from population and / or network and/or consumption patterns. Furthermore, the absence of preliminary time series analysis and re-calibration of the benchmarking model makes the method very attractive moneywise and accessible to small municipal Utilities and low skilled operators. In contrast with existing methods is the threshold of implementation of the invention minimal.

## FIGURES

The following description of the figures of specific embodiments of the invention is merely exemplary in nature and is not intended to limit the present teachings, their application or uses. Throughout the drawings, corresponding reference numerals indicate like or corresponding parts and features.

**Figure** 1 shows an example of the signal delivered to the computer for processing.

**Figure 2** shows an outline of the system and of the delivered output according to method object of the present invention.

**Figure 3A** shows a frequency diagram of the flow of an area during night-time (2:00 - 4:00 a.m.).

**Figure 3B** shows a frequency diagram of the flow of an area during day- time (9:00 - 11:00 a.m.).

**Figure 4** shows the principles of DMA structures.

**Figure 5A** shows a daily flow pattern and its normal variations limits.

**Figure 5B** shows the result of a historical flow survey.

**Figure 6** shows the flow frequency curves processed by the method and system during the time segment of 14:00 - 16:00 p.m.

**Figure 7** shows a sketch of a SCADA network configuration

**Figure 8** shows the processing step of smoothing and simplifying the time series.

**Figure 9A** shows the segmentation processing step.

**Figure 9B** shows an aggregated flow matrix.

**Figure 10** shows a scheme of how the flow model matrix $\mathcal{M}$ is build up.

**Figure 11** represents the evolution of the ratio between modelled and real inflow during a period of two years.

**Figure 12** shows how abnormalities of inflow values are being detected.

**Figure 13** shows the follow up of seasonal effects and rate of rise.

## DETAILED DESCRIPTION OF THE INVENTION

The present invention concerns a computer implemented method for the monitoring of dysfunctions in the water demand of water distribution networks.
Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. The terms or definitions used herein are provided solely to aid in the understanding of the invention.
As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified.

It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se*, by means of further exemplification, the term encompasses *inter alia* a reference to any one of said members, or to any two or more of said members, such as, *e.g.*, any $\geq 3$, $\geq 4$, $\geq 5$, $\geq 6$ or $\geq 7$ etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

A first aspect of the invention relates to a computer implemented method for continuous online flow survey and dysfunction monitoring whereby dysfunctions result in flow values provoked by abnormal consumption events and leaks sized and ranged according to the characteristics of the surveyed District Metered Area of water distributing networks, said method comprises:

- identifying one or a plurality of areas of a network to be surveyed;
- isolating these areas in delimited metered areas;
- equipping each delimited metered area with at least one EM flowmeter delivering a mean value of the flow during a defined time period;
- connecting each EM flowmeter to a processing unit able to treat these flow values online; and

- processing these flow values;

The processing of the flow values includes the steps of registering the flow values a first time, subsequently smoothing said series of values into a second value series with backward creeping mean flow-value of the latest 15 minutes. The previous step followed by aggregating the values of the second value series into a third value series with a broader time span. Each value of the third value series is a set corresponding to one of said broader time spans, each set including four consecutive flow values of the second value series. The previous step followed by defragmenting the third value series into a three-dimensional matrix storing the third value series in a plurality of time segments, whereby each daily time segment being on its turn segmented into a plurality of equal time spans. The characteristics of the modelled flow during each time segment are used as input to benchmark the flow on its normality during the next time segment. The method further including the step of repleting the build-up of the model with the normal evolving flow values.

In this context, the term "normal" in "normal evolving values" and the term "normality" do not refer to a normal distribution as the present invention does not rely on statistical simulation, but instead makes use of an evolving benchmarking model and pattern recognition. The term "normal" in "normal evolving values" and the term "normality" should instead be understood to mean expected, as in expected evolving flow values.

In this context, the term "aggregation" or "aggregating" is to be understood as upending. For example, upending at least one value from a set, value series or the like to another.

The segmentation of the water supply network, first into District Metered Areas and possibly into even smaller delimited metered areas, permit advantageously to prioritize areas that are more severely affected by anomalies, such as, but not limited to, leaks and pipe breaks. By addressing limited areas of the water supply network, the savings accrued as each area is repaired tend to compound, thereby making repairs of further areas of the water supply system advantageously self-financing.

"District Metered Area" or "DMA" is defined herein as a bounded area of a network fed or feeding at least one neighbouring DMA through only one or a plurality of metered sectioning valves.

"EM flowmeter" is defined as a transducer that measures the velocity of a fluid movement by the voltage induced across the fluid as it flows through a magnetic field. The term is in practice used to designate the industrial assembly of an electromagnetic flowmeter, a pre-processing unit, a storage unit and a communication unit.

The division of a time or value series into a sequence of discrete segments of finite length in order advantageously reveals the underlying properties of its sources. In the disclosed method the time series of the measured flow is for analysis purposes preferably segmented in days (24 hours) and each day in n time segments (N1, N2, Ni, ...Nn) dividing the 24-hour day cycle. Each time segment Ni is on its turn divided into equal time spans that are a multiple of the time span between two signals delivered by the EM meter.

This advantageously permits the processing of a stable model of the real consumption, from which, all abnormalities have been removed.

In a further or another embodiment of the invention, further processing is performed on the matrix, resulting in a model matrix M that contains, day by day, the evolving characteristics of the flow. The model matrix M is used to determine the time of emergence of a dysfunction and its duration. The processing of corresponding fields of smoothed flow values matrix allows to quantify the flow abnormality.

These evolving characteristics of the flow advantageously include at least an evolution of the flow values, which flow values provide the means to calculate expected flow values. By preference, said expected flow values have an upper and a lower threshold. In this way, said expected flow values are advantageously used as a benchmark for any further measured values, and thereby abnormal flow values indicative of possible problems in the DMA and/or water network under study.

In this context, the term "value series" or "time series" is understood as a distribution of values of a discreet variable per time unit.Said values being organized in sets or arrays of subdivisions of the same.

By preference, the the method may encompass:

- using the dynamics of the flow to complete the evaluation of normality; or
- reporting to the operator that an abnormal flow situation has occurred and complete the report with additional operational information such as type of abnormality, spilled flow volume and optimum time of repair.

This permits, advantageously, to update the model into a more accurate representation of the water distribution system in the area under analysis. By increasing the accuracy of the model, abnormality detection error can advantageously be minimized.

In a further or another embodiment, a logbook is produced, which logbook resumes all relevant information deducted from the survey. In a further or another embodiment, the logbook is produced by the computer implemented method to produce aging and efficiency performance indicators of the network and derive operation's and renewal's strategy. The possibility to customize the reported data can avoid overburdening users with irrelevant and/or non-actionable data.

The present invention relates also to the use of the method described above to produce a consumption model ready for use in off-line hydraulic network modelling. Preferably, the in this way produced model is used as a tool for designing network extensions or improvements of the network. In this way, adaptation of water networks can match performance and levels of service more closely, resulting in a more efficient financial expenditure.

Further or other uses of the method include using the method as input for online network modelling allowing to steer smoothly the pressure of the network at its minimum guaranteed value, minimizing by this the spills due to unrepaired small leaks beneath the detection limit. In a further or another embodiment, the method is used to extend the flow-survey to a similar analysis of additional parameters such as pressure, conductivity and pH. In this way, the method can be used as input in a water network control system, thereby permitting closer monitoring of the water network and aiding in assessing the quality of the service it provides.

In a further or another embodiment, the method is used for the reporting of the system on optimal repair time as tool for scheduling location and repair interventions. In this way, budget calculation can be made more accurately. Furthermore, the scope of repairs can closely adhere to the actual problems affecting the system, thereby removing most guesswork out of repair operations.

However, it is obvious that the invention is not limited to this application. The method according to the invention can be applied in all sorts of fluid carrying/transporting networks.

The invention is further described by the following non-limiting examples which further illustrate the invention, and are not intended to, nor should they be interpreted to, limit the scope of the invention. For instance, it is obvious that the application of the system can be limited to on-line flow survey during the night time consumption regime.

The present invention will be now described in more details, referring to examples that are not limitative.

**DESCRIPTION OF FIGURES**

With as a goal illustrating better the properties of the invention the following presents, as an example and limiting in no way other potential applications, a description of a number of preferred applications of the computer implemented method for continuous online flow survey and dysfunction monitoring based on the invention, wherein:

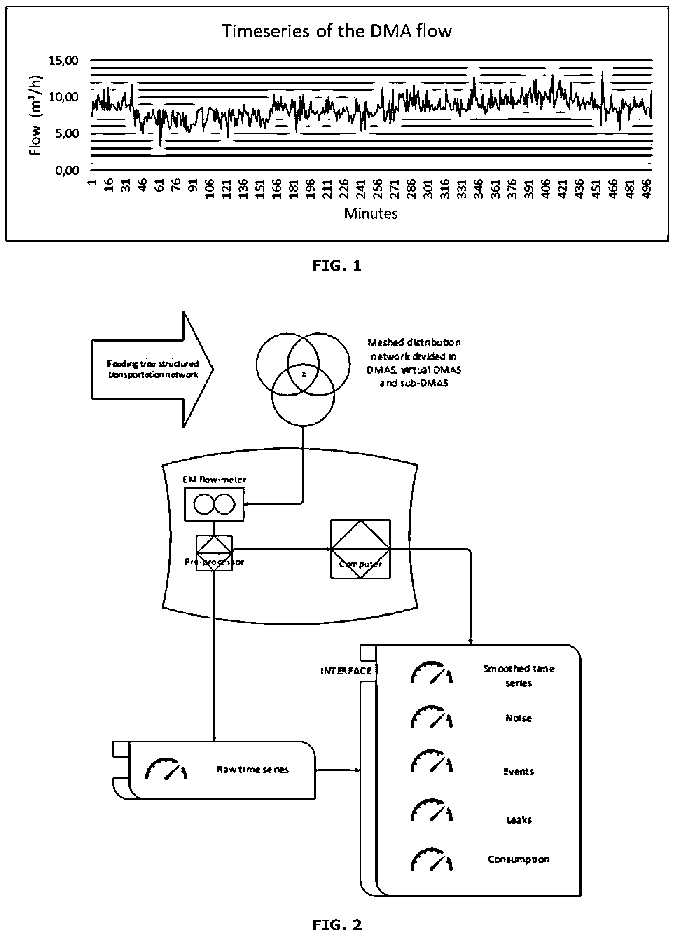

**Figure 1** shows an example of the signal delivered to the computer for processing. The computer recognizes the signals delivered by EM-meter and processes them according to the method subject of the present application.

The assembled system, considered as a whole, produces itself the inputs necessary for data processing and delivers, without human interference, its own output consisting of:

- the decomposition of the water-demand of the network, or a part of it, into ordinary consumption and its usual variations, peak consumption , unusual consumption events and leaks;
- the recommended time for repairing leaks;
- the daily variation curve of the consumption under normal conditions;
- the information gathered during data processing that is useful at the network operational management level.

This output is delivered to the operator on a computer display, a tablet, or an iPhone or /and in a printed format. The output can also be delivered to another reporting device, the displaying computer, equipped with a standard data reporting and supervision system (SCADA).

The communication between operator and the components of the system is bidirectional allowing the operator to instruct the system with a limited number of operations to be performed by the pre-processor and / or the processor.

The system has been designed with a view on two result areas: the operational and the managerial one. They are respectively related to "leak detection" and "asset management".

These two aspects are linked the one with each other through the embedded recognition of the processed indicators designed to recognize flow pattern.

The field work preparation for the installation of the system consists in the sectioning of the network in a selected number of areas where flow monitoring is requested.

Once the system is plugged in, it produces 24/7 on-line (alarm) reporting from day one. Instructions and Reporting are tailored in function of the requested level of sensitivity.

The system requires only one day (day zero) of preliminary self-calibrating measurements initializing the embedded method. The system is self-testing and provides reporting of resetting instructions to be followed in case of incoherent processing results.

The installation of the system does not require any preliminary hydraulic analysis of the network neither statistical flow analyses of the concerned and / or the adjacent areas. The only required preparation work is a sound structuring of the network. The system is a stand-alone application per metered area and does not necessarily request SCADA system for reporting objectives. It is, thanks to its users' friendly concept, accessible to (very) small utilities in charge of water distribution in small municipalities.

**Figure 2** shows the outline of the system and of the delivered output according to method object of the present invention. One will notice the simplicity of the system that makes no use of data external to the surveyed area.

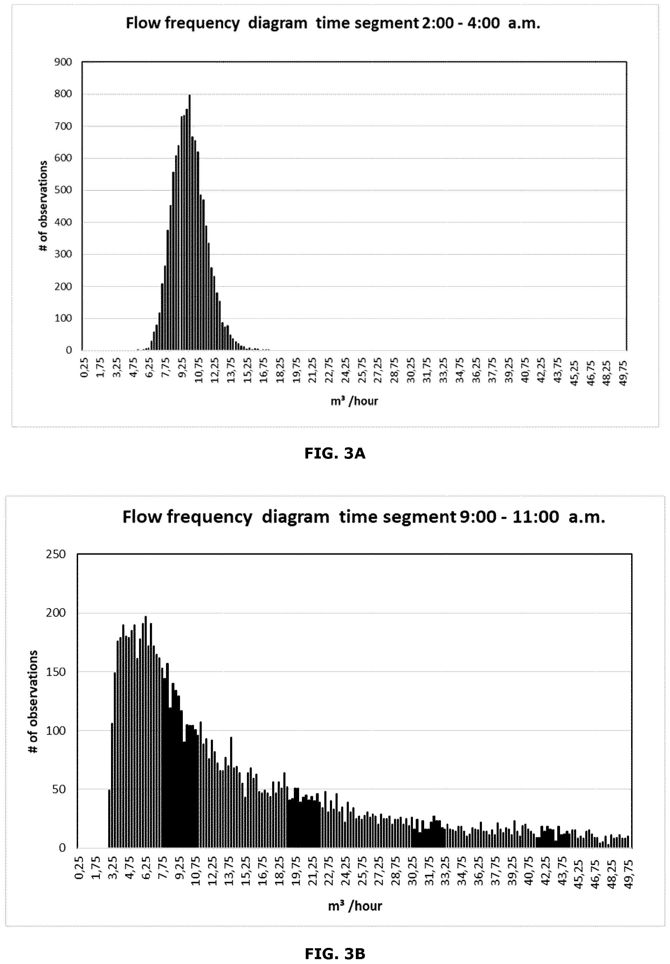

**Figure 3A** shows the frequency diagram of the flow of an area during night-time (2:00 - 4:00 a.m.).

**Figure 3B** shows the frequency diagram of the flow of an area during day- time (9:00 - 11:00 a.m.).

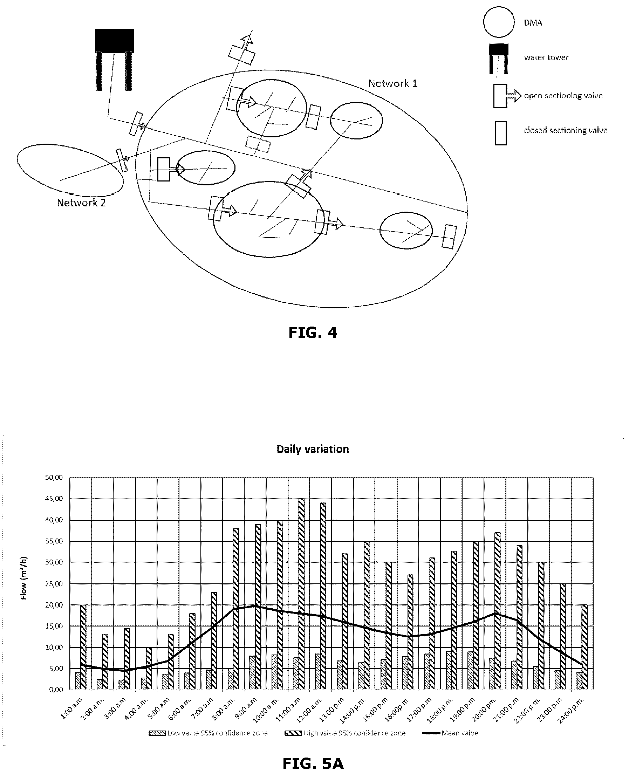

**Figure 4** shows the principles of DMA structures. It is possible to create "independent" areas within a meshed distribution system: these are areas that are connected with neighbouring areas through a limited number of sectioning valve (figure 4). In that case, all other sectioning valves separating the "insulated" area from neighbouring areas remain closed in normal operating conditions.

**Figure 5A** shows the result of a statistical flow analysis resulting in the daily flow pattern and its normal variations limits. The graph shows the mean flow value and the statistically processed confidence zone. One will notice the huge difference between maximum and minimum inflow and the span between night consumption and daily peak consumption amounts a factor 45 ($m^3$/h) /2,5 ($m^3$/h)= 18.

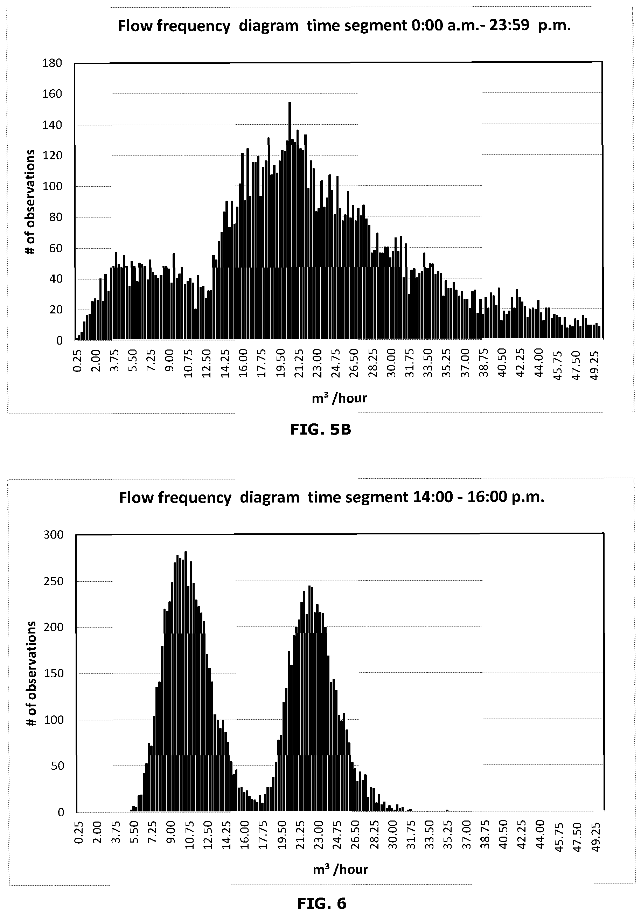

**Figure 5B** shows the frequency curve of the flow during a normal consumption day.

**Figure 6** shows the flow frequency curves processed by the method and system during the time segment of 14:00 - 16:00 p.m.

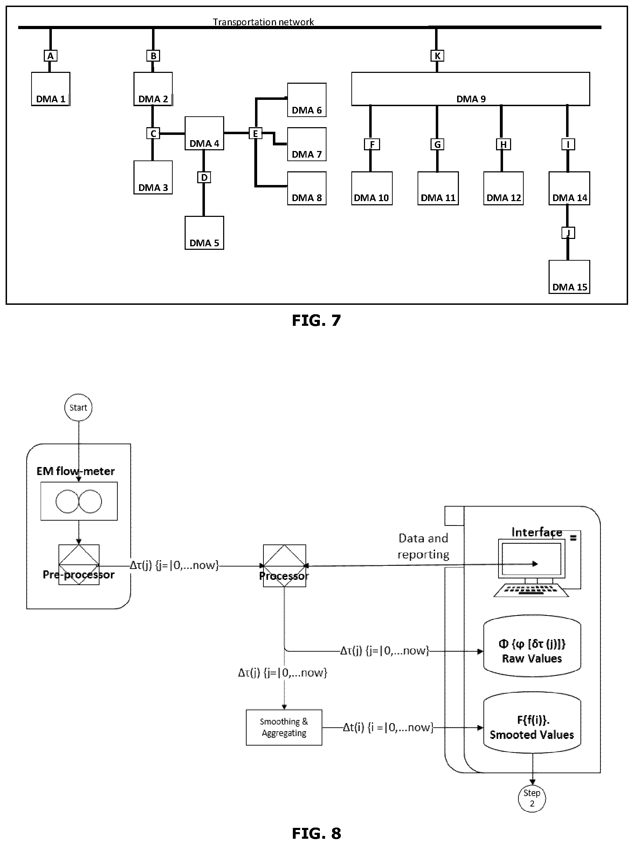

**Figure 7** shows a sketch of a SCADA network configuration.

**Figure 8** shows the processing step of smoothing and simplifying the time series. The data delivered by the EM are prepared for processing by smoothing and aggregating the flow time series.

- The EM(s) send(s) the flow value $\varphi(i)$ every $\delta T(i)$ to the computer using the communication network.
- The computer recognises and stores $\varphi(i)$ every $\delta T(i)$ in $\Phi \{ \varphi 1,...,\varphi, NOW\}$
- If the value of $\varphi(i)$ is negative an error code is generated to the operator and the processing is stopped until corrective actions have been carried out by the operator and the processing can be restarted. [5]
- The computer then calculates the backward mean creeping values of $\varphi(i)$ over the latest 15 minutes and stores them in

$$F \{ F_1,..,F_n \} .$$

. The first value $F_1$ is stored 15 minutes after $\phi_1$

- The computer aggregates the last four consecutive flow values of $F_n$ to one value f(i) and stores them in F{ f(i)} . At this stage, the time files is processed for further analysis.

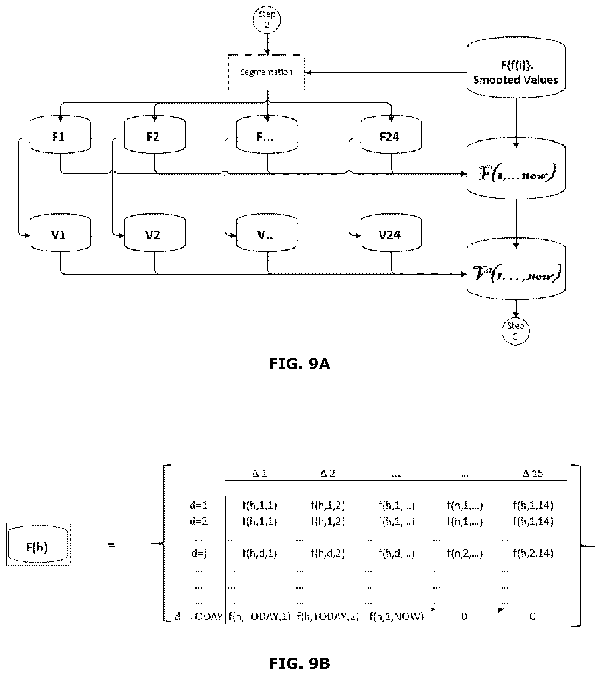

**Figure 9A** shows the segmentation processing step. To this purpose, the vector F{ f(i)|i= 1,...now} is segmented into a plurality of matrixes. All matrices are grouped within one three -dimensional matrix: $\mathcal{F}$

$$\mathcal{F} = \{ \ F_h \,|\, h \ = \ 1,..N\} \ = \ \mathcal{F}\{ \ F_{1,...,}F_N\}$$

The segmentation process is graphically represented in figure 7. Each value f(i) has a position in the matrix $\mathcal{F}$ that defined by its ranking $\Delta t(h,d,j)$ wherein:

- h = 1,... ,24 = chronological number of the time segment
- d = 1,..., today = chronological number of the day after starting the process (calibrating day = 0, starting day = 1)
- j = 1, ..., now = chronological number of the time span within the considered time segment of the day.

[5] A negative value of the inflow means in practice that a boundary sectioning valve of a neighbouring DMA have been opened.

**Figure 9B** shows an aggregated flow matrix.

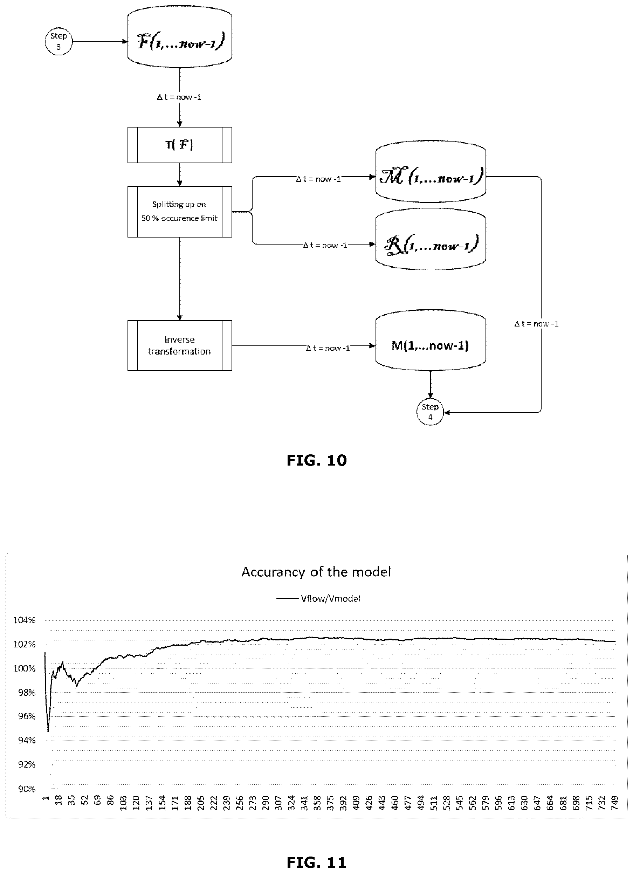

**Figure 10** shows a scheme of how the flow model matrix $\mathcal{M}$ is build up. Each cell of

$$\mathcal{F} \ = \ \{ \ f(h,d,j)\}$$

is mathematically transformed and stored in matrix T ( $\mathcal{F}$ ). The transformed T( $\mathcal{F}$ ) is then made blank for a 50% occurrence partition by emptying cells. The removed values, the residue, are stored in the residue matrix $\mathcal{R}$ . Both matrices are then subsequently transformed-back using the inverse transformation $T^{-1}$. This processing is automatically put on hold in case of an unpredictable flow abnormality and is restarted when the flow values are again normal. Methods using a statistical approach of the flow rate result in high values of leak-alarm thresholds which request the survey of similar regions or additional parameters in order to avoid false positive leak alarms. The particular processing of figure 10 produces a very accurate online evolving flow model, that is subsequently used to:

- distinguish the difference between a false positive (this the false identification of a non- existing leak) and an occurring anomaly;

- detect relatively slight but relevant growth of the cumulated flow resulting from small leaks.

**Figure 11** represents the evolution of the ratio between modelled and real inflow during a period of two years.

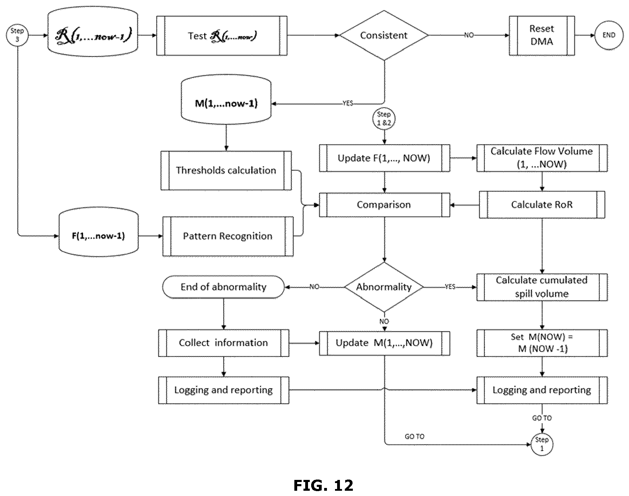

**Figure 12** shows how abnormalities of inflow values are being detected. The method uses a particular analysis to split up cyclic seasonal variation from raising spill volumes resulting from unrepaired small or increasing small leaks beyond their detection limit.

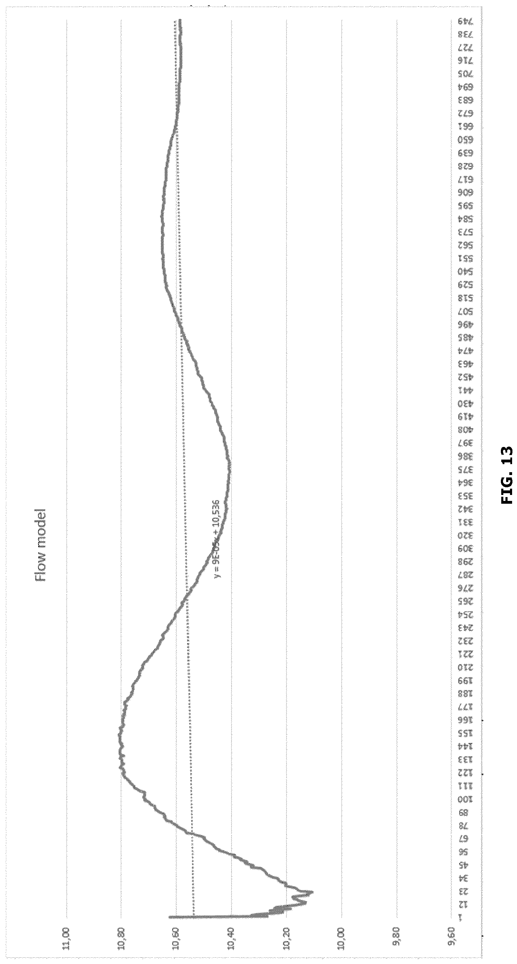

**Figure 13** shows the follow up of seasonal effects and rate of rise. The rate of rise is per definition the increase of the inflow during a given period. The algorithm of the system reports the Rate of Rise of the mean daily flow.

It is supposed that the present invention is not restricted to any form of realization described previously and that some modifications can be added to the presented example without reappraisal of the appended claims. For example, the present invention has been described referring to potable water networks, but it is clear that the invention can be applied to networks for the transportation of other fluids, in particular, non-compressible fluids.

Definitions and symbols:

| | |
|---|---|
| dimension: | all flow values are expressed in $m^3/h$ |
| period: | general term to indicate a limited partition of time |

| | |
|---|---|
| time segment: | partition of a 24-hour day; in the example there are 24 time segments a day symbolised by H (h) with h = 1,...,24. |
| time span: | partition of a time segment in equal parts |
| $\delta\tau$: | time span between two signals delivered by the EM, this is one minute in this example |
| i: | chronological ranking number of time spans $\delta\tau$ |
| $\delta\tau(i)$: | i number of time span; there are 24 hours x 60 minutes = 1440 |
| $\delta\tau(i)$ per day v(i) : | mean value of a discreet variable V during time span $\delta\tau(i)$ |
| vector X: | X{ x [$\delta\tau(i)$\|i = 1, .., n]} = V {v1 ,...,vn } , this is a vector storing the values of a discreet variable x in their chronological order |
| $\delta\tau$(now) or $\Delta$t(now): | period $\delta\tau(i)$ or $\Delta$t(j) during which the discreet variable is delivered and processed |
| now - 1: | time segment or time span before "now" |
| now + 1: | time segment or time span directly after "now" |
| measured flow: | the raw unsmoothed flow is stored as a vector: $\Phi$ { $\varphi$ [$\delta\tau(i)$ \|i = 1, .., n, now]} = $\Phi$ { $\varphi$1,...,$\varphi$n, $\varphi$now} |
| smoothed flow: | backward creeping mean flow-value of the latest 15 minutes |

$$\digamma \{ \digamma [\delta\tau(i)|i = 1, .., n]\} = \digamma \{ \digamma1,..,\digamma n\}$$

| | |
|---|---|
| $\Delta$t(j): | in the present example is the aggregated time span = 4 $\times$ $\delta\tau$ |
| (i): | there are 15 $\Delta$t in one hour |
| j: | chronological order of $\Delta$t with j = from 1 to now with j < 16 |
| $\Delta$t (j): | chronological number of time span $\Delta$t; there are 360 $\Delta$t(j) per day |
| aggregated flow: | F { f[$\Delta$t(j) \|j = 1, .., n]} = F { $f_1$,..., $f_{15}$, } with $f_j$ = mean value of $\digamma$ during time span $\Delta$t (j) |
| MEAN [ f (i) ]: | the mean value of the flow is defined as the arithmetical mean of the aggregated flow of the time series during a defined period |
| E [ f(i) ]: | the expected aggregated flow is defined as the weighted sum of the flow, where the weights correspond to the probabilities of measuring this value |
| MEDIAN [f (i) ]: | median aggregated flow value, this is the flow value with the highest occurrence frequency Note: as the distribution curve of the flow is never symmetric there always will be a difference between MEAN[ f(i) ], E [ f(i) ] and MEDIAN [f (i) ]. |
| VAR [ f(i) ]: | this the expected value of the square of differences between aggregated flow value and its ex- |

$$\text{VAR } [f(i)](i = 1, ..., N) = \frac{\Sigma \{ f(i) - E[ f(i) ]\}^2}{N}$$

| | |
|---|---|
| pected value | |
| Rate of Rise: | The rate of rise is per definition the increase of the inflow during a given period. The algorithm of the system reports the RoR of the mean daily flow. |

## Claims

1. A computer implemented method for continuous online flow survey and dysfunction monitoring whereby dysfunctions result in flow values provoked by abnormal consumption events and leaks sized and ranged according to the characteristics of the surveyed District Metered Area of water distributing networks, said method comprises:

   - identifying one or a plurality of areas of a network to be surveyed;
   - isolating these areas in delimited metered areas;
   - equipping each delimited metered area with at least one EM flowmeter delivering a mean value of the flow during a defined period;
   - connecting each EM flowmeter to a processing unit able to treat these flow values online; and
   - processing these flow values;

   **characterized in that**, the processing of the flow values includes the steps of:
   registering the flow values a first time, subsequently smoothing said series of values into a second value series with backward creeping mean flow-value of the latest 15 minutes, aggregating the values of the second value series into a third value series with a broader time span, wherein each value of the third value series is a set corresponding to one of said broader time spans, each set including four consecutive flow values of the second value series, and defragmenting the third value series into a three-dimensional matrix storing the third value series in a plurality of time segments, whereby each daily time segment being on its turn segmented into a plurality of equal time spans, the characteristics of the modelled flow during each time segment are used as input to benchmark the flow on its normality during the next time segment, the method further including the step of repleting the build-up of the model with the normal evolving flow values.

2.  Method according to claim 1, whereby a further processing is performed on the matrix, resulting in a model matrix M that contains, day by day, the evolving characteristics of the flow, **characterized in that**, processing is automatically put on hold in case of an unpredictable flow abnormality and is restarted when the flow values are again normal.

3.  Method according to claim 2, the method may optionally encompass:

    - using the dynamics of the flow to complete the evaluation of normality;
    - reporting to the operator that an abnormal flow situation has occurred and complete the report with additional operational information such as type of abnormality, spilled flow volume and optimum time of repair.

4.  Method according to claim 3, further comprising producing a logbook resuming all relevant information deducted from the survey.

5.  Method according to claim 4, whereby the logbook is produced by the computer implemented method to produce aging and efficiency performance indicators of the network and derive operation's and renewal's strategy.

6.  Use of the computer implemented method according any of the previous claims 1-5 to produce a consumption model ready for use in off-line hydraulic network modelling and preferably use this model as tool for design of network extensions or improvements of the network.

7.  Use of the computer implemented method according any of the previous claims 1-6 as an input for online network modelling allowing to steer smoothly the pressure of the network at its minimum guaranteed value, minimizing by this the spills due to unrepaired small leaks beneath the detection limit.

8.  Use of the computer implemented method according any of the previous claims 1-7 to extend the flow-survey to a similar analysis of additional parameters such as pressure, conductivity and pH.

9.  Use of the computer implemented method according any of the previous claims 1-8 for the reporting of the system on optimal repair time as tool for scheduling location and repair interventions.

**FIG. 1**

**FIG. 2**

**FIG. 3A**

**FIG. 3B**

**FIG. 4**

**FIG. 5A**

**Flow frequency diagram time segment 0:00 a.m.- 23:59 p.m.**

**FIG. 5B**

**Flow frequency diagram time segment 14:00 - 16:00 p.m.**

**FIG. 6**

Transportation network

| | A | | B | | | | K | |
|---|---|---|---|---|---|---|---|---|

DMA 1

DMA 2

C

DMA 4

E

DMA 6

DMA 7

DMA 8

DMA 9

DMA 3

D

DMA 5

F

G

H

I

DMA 10

DMA 11

DMA 12

DMA 14

J

DMA 15

**FIG. 7**

Start

**EM flow-meter**

**Pre-processor**

$\Delta\tau(j)\ \{j=|0,...now\}$

**Processor**

Data and reporting

**Interface**

$\Delta\tau(j)\ \{j=|0,...now\}$

$\Phi\ \{\varphi\ [\delta\tau\ (j)]\}$
**Raw Values**

$\Delta\tau(j)\ \{j=|0,...now\}$

Smoothing & Aggregating

$\Delta t(i)\ \{i=|0,...now\}$

$F\{f(i)\}.$
**Smooted Values**

Step 2

**FIG. 8**

**FIG. 9A**

$$F(h) = \begin{array}{c|ccccc} & \Delta 1 & \Delta 2 & \cdots & \cdots & \Delta 15 \\ \hline d=1 & f(h,1,1) & f(h,1,2) & f(h,1,\ldots) & f(h,1,\ldots) & f(h,1,14) \\ d=2 & f(h,1,1) & f(h,1,2) & f(h,1,\ldots) & f(h,1,\ldots) & f(h,1,14) \\ \cdots & \cdots & \cdots & \cdots & \cdots & \cdots \\ d=j & f(h,d,1) & f(h,d,2) & f(h,d,\ldots) & f(h,2,\ldots) & f(h,2,14) \\ \cdots & \cdots & \cdots & \cdots & \cdots & \cdots \\ \cdots & \cdots & \cdots & \cdots & \cdots & \cdots \\ \cdots & \cdots & \cdots & \cdots & \cdots & \cdots \\ d=\text{TODAY} & f(h,\text{TODAY},1) & f(h,\text{TODAY},2) & f(h,1,\text{NOW}) & 0 & 0 \end{array}$$

**FIG. 9B**

**FIG. 10**

**FIG. 11**

**FIG. 12**

Flow model

y = 9E-05x + 10.536

**FIG. 13**

Europäisches
Patentamt

European
Patent Office

Office européen
des brevets

# EUROPEAN SEARCH REPORT

**Application Number**

**EP 22 19 8971**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 078240 A1 (SIEMENS AG) 3 January 2013 (2013-01-03) * paragraphs [0011] – [0013], [0039] – [0041]; figures 1,2 * | 1-9 | INV. E03B7/00 G01M3/28 |
| X | US 2021/096037 A1 (KANNIGANTI NAGARAJ [IN]) 1 April 2021 (2021-04-01) * paragraphs [0019], [0021], [0038], [0050] – [0056]; figures 1,2b,4 * | 1-9 | |
| A | US 2020/158291 A1 (XIN KUNLUN [CN] ET AL) 21 May 2020 (2020-05-21) * abstract; figures 1,2 * | 1-9 | |

| | TECHNICAL FIELDS SEARCHED (IPC) |
|---|---|
| | E03B G01M |

The present search report has been drawn up for all claims

| Place of search | Date of completion of the search | Examiner |
|---|---|---|
| The Hague | 26 January 2023 | Debesset, Sébastien |

## ANNEX TO THE EUROPEAN SEARCH REPORT
## ON EUROPEAN PATENT APPLICATION NO.

**EP 22 19 8971**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-01-2023**

| Patent document cited in search report | Publication date | Patent family member(s) | | Publication date |
|---|---|---|---|---|
| DE 102011078240 A1 | 03-01-2013 | CN | 103620363 A | 05-03-2014 |
| | | DE | 102011078240 A1 | 03-01-2013 |
| | | EP | 2691756 A2 | 05-02-2014 |
| | | US | 2014149054 A1 | 29-05-2014 |
| | | WO | 2013000686 A2 | 03-01-2013 |
| US 2021096037 A1 | 01-04-2021 | NONE | | |
| US 2020158291 A1 | 21-05-2020 | CN | 109442221 A | 08-03-2019 |
| | | US | 2020158291 A1 | 21-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011078240 A1
- US 2021096037 A1
- US 2020158291 A1